# EUROPÄISCHE PATENTANMELDUNG

(11) **EP 2 283 947 A1**
(43) Veröffentlichungstag der Anmeldung: **16.02.2011**
(21) Anmeldenummer: 10008527.3
(22) Anmeldetag: 16.08.2010
(51) Int. Cl.: B21F 45/06, B60J 10/00

(54) **Drahtgrundkörper mit nur einem weiteren Zugmittel**

(30) Priorität: 14.08.2009 DE 102009037603
(71) Anmelder: Rhodius GmbH, 91781 Weissenburg (DE)
(72) Erfinder: Kopetzky, Dr. Robert, 91207 Lauf (DE); Appel, Erwin, 91785 Pleinfeld (DE)
(74) Vertreter: Weigel, Matthias

(57) **Zusammenfassung**

Die Erfindung betrifft einen Drahtgrundkörper (1) zum Verstärken einer Dichtung aus elastischem Material, wie einer Türdichtung, wobei der Drahtgrundkörper (1) einen in Buchten (3) entlang einer Mittellängsachse (4) des Drahtgrundkörpers (1) angeordneten Draht (2) aufweist, der von einem Zugmittel (5) gekreuzt ist, wobei nur ein einziges Zugmittel (5) quer zu den Buchten (3), zumindest annähernd parallel zur Mittellängsachse (4) ausgerichtet, vorhanden ist. Die Erfindung betrifft ferner eine Dichtung mit einem entsprechenden Drahtgrundkörper.

## Beschreibung

Die Erfindung betrifft einen Drahtgrundkörper zum Verstärken einer Dichtung aus elastischem Material, wie einer Türdichtung, wobei der Drahtgrundkörper einen in Buchten entlang einer Mittellängsachse des Drahtgrundkörpers angeordneten Draht aufweist, der von einem Zugmittel gekreuzt ist.

Die Erfindung betrifft auch eine Dichtung mit einem Drahtgrundkörper, wobei die Dichtung insbesondere als Autotürdichtung bei einem Kraftfahrzeug, wie einem Pkw oder einem Lkw, Anwendung findet. Sie findet aber auch in der Luft- und Schifffahrt sowie bei öffentlichen Verkehrsmitteln, die auch schienengebunden sein können und bei Industriefahrzeugen Anwendung. Es ist ferner ein stationärer Einsatz in Gebäuden vorgesehen.

Unter "Draht" wird hier ein relativ dünnes, langes und biegsames Stück Metall mit beliebigem, vorzugsweise kreisförmigem, Querschnitt verstanden. Als Querschnittsformen des Drahtes werden dabei aber auch Rechtecksquerschnitte, wie sie bei Flachdrähten vorkommen, Polygonquerschnitte und elliptische Querschnitte umfasst. Die Drähte sind insbesondere aus Eisen, Kupfer, Messing, Aluminium, Silber, Gold oder Edelstahl sowie entsprechenden Legierungen bestehend. Insbesondere sich Legierungen mit Magnesium umfasst.

Bezüglich der Erfindung wird im Folgenden auch der Begriff "Zugmittel" verwendet. Unter Zugmittel werden sämtliche Elemente verstanden, die in der Längsrichtung zugfest ausgebildet sind. Dies umfasst Gewebebänder, Fasern, Filamente und Fäden einerseits, aber auch Drähte andererseits. Für diese Zugmittel bietet sich die Verwendung unterschiedlichster Materialien, wie Metalle und deren Legierungen, an. Allerdings sind auch bestimmte textile Materialien und Kunststoffmaterialien, etwa Aramidfasern und Kohlestofffasern, aber auch Glasfasern, geeignet. Aus dem Stand der Technik sind Drahtgrundkörper nach dem Oberbegriff von Anspruch 1 bekannt. Solche Drahtgrundkörper werden beispielsweise von der Firma Hope Global als Produkte unter der Markenbezeichnung "Form-A-Grip" vertrieben. Dabei sind die Zugmittel aus Fasern oder Drähten ausgebildet und im Wesentlichen äquidistant zueinander über die gesamte Breite des Drahtgrundkörpers verteilt.

Die Drahtgrundkörper, die als Verstärkung von Türdichtungen Verwendung finden, geben den Türdichtungen eine ausreichende Formsteifigkeit. Die entsprechenden Drahtgrundkörper sind nach Fertigstellung der Türdichtungen von dem elastischen Material, wie Gummi oder gummiähnlichem Kunststoff umgeben. Der Drahtgrundkörper bildet dabei ein sogenanntes Endoskelett und ist in die Türdichtung eingebettet. Eine weitere Gegendichtung greift in die, eine U- oder V-förmige Biegung gebildete, Nut dann ein, wenn die durch die Tür zu verschließende Öffnung abgedichtet ist.

Da die Türdichtung im Regelfall um die gesamte Außenkante der Tür umlaufend ausgestaltet ist, muss der Drahtgrundkörper mehrmals um eine Umformachse gebogen werden, wobei die Umformachse orthogonal zur Längsachse bzw. zur Biegeachse ausgerichtet ist.

Beim Biegen des Drahtgrundkörpers um die Umformachse treten Spannungen im Inneren des Drahtgrundkörpers auf. So befinden sich die Enden der Buchten auf einem gedachten ersten Kreis, der einen geringeren Radius aufweist, als der den Enden der Buchten gegenüberliegende Bereich. Das heißt, dass der den Buchten gegenüberliegende Bereich des Drahtgrundkörpers nach dem Umbiegen um die Umformachse auf einem gedachten Kreis liegt, nämlich einem zu dem ersten Kreis mit größerem Radius versehenen Kreis.

Im Stand der Technik werden durch die Zugmittel sowohl die Enden der Buchten als auch die von den Enden der Buchten beabstandeten Bereiche des Drahtgrundkörpers in ihrer Position direkt oder indirekt festgelegt.

Ein Ausbauchen des Drahtgrundkörpers ist leider häufig die Folge, wenn der U-oder V-förmige Vorformling um die Umformachse gebogen wird. Die dabei auftretenden Spannungen können so stark sein, dass der Drahtgrundkörper an einigen Stellen ausbeult oder sogar bricht. Dies beeinträchtigt dann die Formstabilität und Formsteifigkeit des Drahtgrundkörpers negativ. Dadurch verschlechtert sich auch die Formhaltigkeit der Türdichtung.

Aus dem Stand der Technik sind auch Alternativen zu solchen Drahtgrundkörpern bekannt, nämlich aus geschlitzten Blechen gefertigte Grundkörper, wobei von einem Verbindungssteg sich gegenüberliegende, von dem Verbindungssteg abstehende Laschen angeordnet sind. Die Laschen auf einer Seite des Verbindungsstegs sind zueinander äquidistant angeordnet.

Solche auch als geschlitzte Bleche bezeichneten Grundkörper sind um eine Biegeachse U-förmig gebogen ausgebildet, wobei die Biegeachse parallel zu einer Längsachse des Bleches im Bereich des Verbindungssteges angeordnet ist.

Die vorher beschriebenen Bruchprobleme, die mit einem Ausbauchen auf der Innenseite des Drahtgrundkörpers, also im Bereich der Enden der Buchten einhergehen, ist bei solchen geschlitzten Blechen nicht festzustellen, da die Enden der Laschen zueinander nicht festgelegt sind.

Allerdings sind solche geschlitzten Bleche in der Herstellung wesentlich teurer, als aus Draht gefertigte Grundkörper.

Es ist die Aufgabe der vorliegenden Erfindung, die Ziehbarkeit des Drahtgrundkörpers in einer kostengünstigen Weise zu ermöglichen.

Diese Aufgabe wird erfindungsgemäß dadurch gelöst, dass nur ein einziges Zugmittel quer zu den Buchten, zumindest annähernd parallel zur Mittellängsachse ausgerichtet, vorhanden ist.

Die Aufgabe wird auch durch eine Dichtung gelöst, die einen erfindungsgemäßen Drahtgrundkörper umfasst.

Vorteilhafte Ausführungsformen sind in den Unteransprüchen beansprucht und werden nachfolgend näher erläutert.

So ist es von Vorteil, wenn das Zugmittel äquidistant zu den Enden der Buchten angeordnet ist. Auf diese Weise ist eine symmetrische Ausgestaltung des Drahtgrundkörpers erreichbar, was insbesondere beim Biegen des Drahtgrundkörpers um eine mit der Mittellängsachse fluchtende Biegeachse von Vorteil ist. Insbesondere kann bei einer solchen Ausgestaltung eine sägezahnartige Umformung des Drahtgrundkörpers um die Biegeachse erreicht werden.

Wenn das Zugmittel als Draht, insbesondere als Flachdraht, ausgebildet ist, so lässt sich auf kostengünstige Materialien zurückgreifen. Ferner wenn die außen liegenden Enden des Drahtes im Bereich der von der Mittellängsachse beabstandeten Bereiche abgeflacht umgeformt sind, wird der sogenannte "hungry horse"-Effekt vermieden.

Um bei einer Gesamtlänge von 3 m des Drahtgrundkörpers eine Dehnung von zumindest 50 mm zu ermöglichen, ist es von Vorteil, wenn das Zugmittel um eine Ebene durch den Draht, in der auch die Mittellängsachse befindlich ist, oszillierend angeordnete Verwerfungen aufweist.

Wenn sich die Verwerfungen beidseitig oder einseitig der Ebene erheben und vorzugsweise eine sinusförmige Ausprägung aufweisen, lassen sich die Verwerfungen unter Nutzung herkömmlicher Präge- und/oder Biegevorrichtungen einbringen.

Eine Nutzbarkeit des Drahtgrundkörpers erhöht sich, wenn der Drahtgrundkörper um eine Biegeachse, die parallel zur Mittellängsachse ausgerichtet ist, V-förmig gebogen ist oder um zwei Biegeachsen, die parallel oder quer zur Mittellängsachse ausgerichtet sind, im Wesentlichen U-förmig gebogen ist.

Der sogenannte "hungry horse"-Effekt lässt sich auch besonders gut vermeiden, wenn der Draht in einem von einer Biegeachse aus gesehenen äußeren Bereich flachgedrückt ist.

Wenn das Zugmittel zwischen den Biegeachsen angeordnet ist, so wird ein Verkanten oder Verschieben des Drahtgrundkörpers beim Ziehen, durch Krafteinbringung mittels des Zugmittels, verhindert.

Um einen möglichst stabilen Drahtgrundkörper zu erreichen, ist es von Vorteil, wenn die Buchten mäanderförmig entlang der Mittellängsachse aneinander gereiht sind. Die Verbindung zwischen dem Draht und dem Zugmittel wird dann besonders haltbar, wenn der Draht einen runden Querschnitt und das Zugmittel einen eckigen Querschnitt aufweist. Es ist von Vorteil, wenn der Draht mit dem Zugmittel stoff-, form- und/oder kraftschlüssig verbunden ist. Gerade bei einer durch Schweißung oder Lötung erreichten Verbindung eines runden Drahtes mit einem Zugmittel, das einen eckigen Querschnitt aufweist, hat sich diese Kombination bewährt.

Wenn das Zugmittel entweder über den Draht oder unter dem Draht hindurchgeführt ist, oder abwechselnd über und unter dem Draht hindurchgeführt ist, so lässt sich auf spezielle Anforderungsprofile an den Drahtgrundkörper zielgenau reagieren.

Um auf Formschluss zurückzugreifen, ist es von Vorteil, wenn das Zugmittel an dem Draht über ein längliches Element, wie einen weiteren Draht, angebunden ist. Hier bieten sich Flecht-, Strick- und/oder Häkeltechniken an. Auch ein maschinenbildender Quereinschuss von zusätzlichen länglichen Elementen ist von Vorteil. Um das Einbringen des Drahtgrundkörpers in Dichtungen besonders bedarfsgerecht zu gestalten, ist es von Vorteil, wenn der Drahtgrundkörper um eine zur Biegeachse orthogonal ausgerichtete Umformachse gebogen ist.

Die Erfindung wird nachfolgend auch mit Hilfe einer Zeichnung näher erläutert. Es zeigen:
- Fig. 1: einen unverbogenen Drahtgrundkörper, der von der Firma Hope Global unter der Bezeichnung "Form-A-Grip" vertrieben wird,
- Fig. 2: einen unverbogenen, aus einem geschlitzten Blech gefertigten Grundkörper aus dem Stand der Technik,
- Fig. 3: eine Variante eines verbogenen Drahtgrundkörpers,
- Fig. 4: einen zu einem Vorformling gebogenen Drahtgrundkörper aus Fig. 3 in perspektivischer Ansicht,
- Fig. 5: einen um die Umformachse nochmals umgebogenen Vorform- ling aus Fig. 4,
- Fig. 6: eine Variante eines unverbogenen Drahtgrundkörpers,
- Fig. 7: eine weitere Variante eines Drahtgrundkörpers im unverbogenen Zustand,
- Fig. 8: das in Fig. 7 als VIII gekennzeichnete Detail,
- Fig. 9: einen um eine Biegeachse U-förmig gebogenen Drahtgrundkör- per, basierend auf der Variante gemäß Fig. 7,
- Fig. 10: einen um die Biegeachse und die Umformachse gebogenen Drahtgrundkörper, basierend auf der Variante gemäß Fig. 6,
- Fig. 11: eine erfindungsgemäße Ausgestaltung eines Drahtgrundkörpers im flachen, d.h. noch unverbogenen Zustand,
- Fig. 12: einen Detailausschnitt gemäß der Ausgestaltung nach Fig. 11,
- Fig. 13: eine zweite erfindungsgemäße Ausgestaltung eines Drahtgrund- körpers im flachen, noch unverbogenen Zustand,
- Fig. 14: eine Detailansicht eines Ausschnittes des Drahtgrundkörpers aus Fig. 13,
- Fig. 15: eine weitere erfindungsgemäße Ausführungsform eines Draht- grundkörpers im zweifach umgebogenen Zustand,
- Fig. 16: eine Draufsicht auf eine noch nicht umgeformte Ausführungs- form eines erfindungsgemäßen Drahtgrundkörpers mit einem etwa mittig angeordneten Zugmittel, und
- Fig. 17a - 17c: drei teilweise geschnittene Seitenansichten dreier Varianten ei- nes erfindungsgemäßen Drahtgrundkörpers mit verformten Zugmittel.

Die Figuren sind lediglich schematischer Natur und dienen nur dem Verständnis der Erfindung. In allen Figuren werden für die gleichen Elemente dieselben Bezugszeichen verwendet.

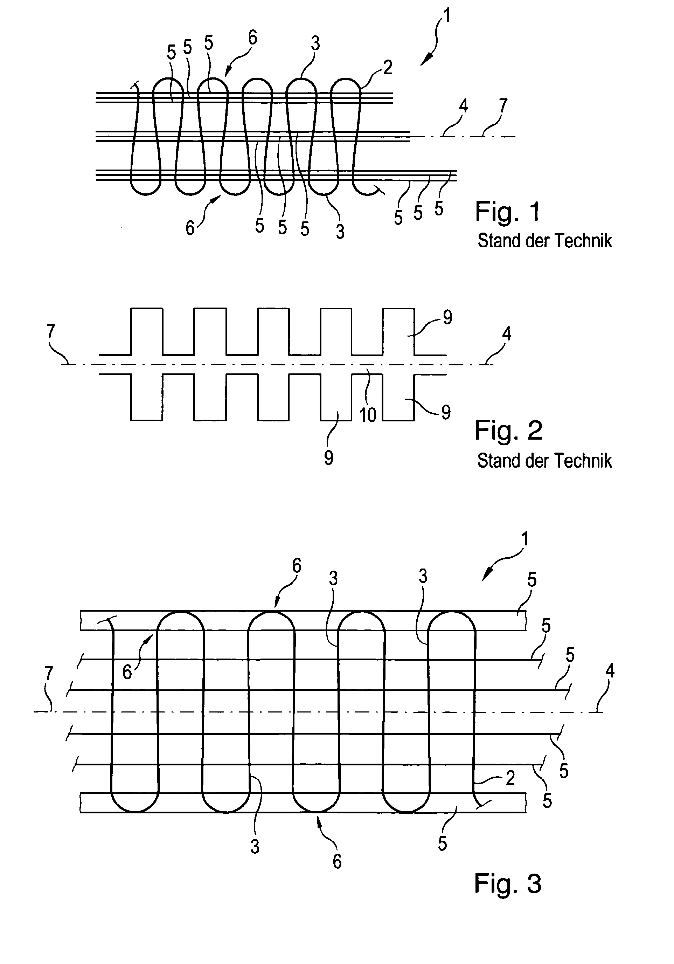

In Fig. 1 ist ein Drahtgrundkörper 1 dargestellt. Der Drahtgrundkörper 1 weist einen Draht 2 auf. Der Draht 2 erstreckt sich in mäanderförmigen Buchten 3 entlang einer Längsachse 4 des Drahtgrundkörpers 1. Mehrere Zugmittel erstrecken sich parallel zur Mittellängsachse 4 über dem Draht 2 und/oder unter diesem. Insgesamt sind neun Zugmittel 5 dargestellt, die sowohl um die Mittellängsachse 4 herum angeordnet sind, als auch an Endbereichen 6 der Buchten 3 mit dem Draht verbunden sind. Die Zugmittel 5 und der Draht 2 sind miteinander in Kontakt.

Die Zugmittel 5 können aus demselben Material wie der Draht 2 bestehen, insbesondere aus metallischem Werkstoff. Allerdings ist es möglich, dass die Zugmittel 5 auch als Fäden oder Fasern aus Kunststoff, abweichend vom Draht 2 ausgebildet sind.

Der Drahtgrundkörper 1 aus Fig. 1 ist im flachen Zustand dargestellt und wird für den fertigen Zustand zweimal gebogen, nämlich einmal um eine Biegeachse 7, die immer parallel zur Mittellängsachse 4 ausgerichtet ist und im dargestellten Fall deckungsgleich mit dieser ist. Nachfolgend wird der dabei erreichte Vorformling um eine in Fig. 1 nicht dargestellte Umformachse 8 gebogen. Während der Drahtgrundkörper 1 nur um eine einzige Biegeachse 7, somit V-förmig, gebogen wird, ist es auch möglich, dass der Drahtgrundkörper 1 um zwei Biegeachsen 7, die parallel zur Mittellängsachse 4 angeordnet sind oder quer zu dieser angeordnet sind, in einem ersten Schritt gebogen wird und nachfolgend dann um die Umformachse 8 gebogen wird. In diesem Fall wird eine U-förmige Umbiegung erreicht.

Ein weiterer Grundkörper ist in Fig. 2 dargestellt. Dieser Grundkörper ist jedoch nicht aus Draht gebildet, sondern aus geschlitztem Blech. Das geschlitzte Blech weist Laschen 9 auf, die über einen Verbindungssteg 10 miteinander in Verbindung stehen. Der Verbindungssteg 10 beherbergt auch eine Mittellängsachse 4, zu der die Laschen 9 symmetrisch angeordnet sind.

Auch dieser Grundkörper ist noch im unverbogenem Zustand dargestellt und wird ebenfalls um eine einzige Biegeachse 7 V-förmig oder um zwei Biegeachsen 7 U-förmig zu einem Vorformling gebogen. Die Biegeachse 7 liegt deckungsgleich auf der Mittellängsachse 4.

In Fig. 3 ist eine weitere Variante dargestellt.

In Fig. 3 ist der noch flache, d.h. der unverbogene Drahtgrundkörper 1 dargestellt. Die außen, im Bereich der Ränder des Drahtgrundkörpers 1 vorhanden Zugmittel 5, sind besonders dick und fest ausgeführt. Auch die Verbindung zwischen diesen besonders dicken Zugmitteln 5 und dem Draht 2 ist besonders fest ausgebildet. In der dargestellten Variante sind diese außen liegenden Zugmittel 5 und der Draht 2 miteinander verschweißt. Alternativ bieten sich aber auch Verknüpfungstechniken an, z.B. Flechttechniken, Häkeltechniken oder Stricktechniken. Auch die Verwendung von Löt-, Schweiß- oder Klebeverbindungen ist denkbar.

Insbesondere bietet sich ein Rollnahtschweißverfahren an. Dadurch können die als Drähte ausgebildeten Zugmittel 5 an unterschiedlichen Stellen an einer Schlaufengeometrie vom Draht 2 fixiert werden. Auch eine Fixierung unter Einsatz eines Lasers ist von Vorteil, da dann eine Fertigung im Durchlaufverfahren erleichtert wird.

Werden Flachdrähte verwendet, ist dies vorteilhaft für einen bezüglich der Biegesteifigkeit optimierten Ausgestaltung.

Bei der in Fig. 3 dargestellten Variante ist der Draht 2 auf die äußersten beiden Zugmittel 5 aufgelegt und dann mit diesen verbunden. Dasselbe gilt für die innen liegenden Zugmittel 5. Es ist jedoch möglich, dass die Zugmittel 5 auf den Draht 2 gelegt sind und dann mit diesem verbunden werden. Auch ist ein wechselweises Anliegen eines Zugmittels 5 an der Ober- und eines anderen Zugmittels 5 an der Unterseite des Drahtes 2 möglich. Auch ist es möglich, dass die Zugmittel 5 alternierend abwechselnd über oder unter dem Draht 2 hindurchgeführt sind.

Bei besonders dicker Ausgestaltung der äußersten beiden Zugmittel 5 ist es auch möglich, dass diese beiden äußeren Zugmittel 5 den Draht umgreifen. Sämtliche Kombinationen dieser Varianten sind ebenfalls als offenbar anzusehen.

Wie der schematischen Figur zu entnehmen ist, sind die weiter innen liegenden Zugmittel 5, also jene Zugmittel 5, die zwischen den beiden äußersten Zugmitteln 5 liegen, und benachbart zu der Längsachse 4 bzw. Biegeachse 7 sind, kleiner als der Querschnitt der außen liegenden Zugmittel 5.

Die als zweite Drähte ausgeformten Zugmittel 5, welche an den Endbereichen 6 angebracht sind, sind in Fig. 3 gut zu erkennen.

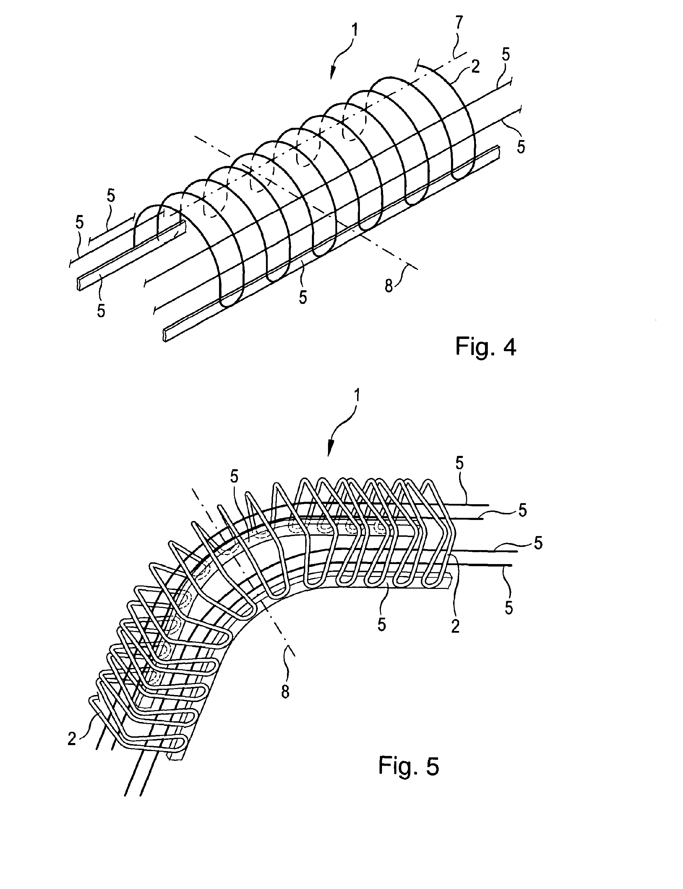

In Fig. 4 ist der um die Biegeachse 7 umgeformte Drahtgrundkörper, wie er ursprünglich in Fig. 3 ausgebildet war, dargestellt. Bei nur einer Biegeachse 7 ist die erreichte Umformung in etwa V-förmig, wohingegen bei zwei Biegeachsen 7 eine U-förmige Umformung erreicht ist.

Der Drahtgrundkörper 1 aus Fig. 4 ist nach einer nachfolgenden Umbiegung um die Umformachse 8 nochmals schematisch dargestellt. In der dann erreichten und in Fig. 5 dargestellten Form wird der Drahtgrundkörper 1 nachfolgend dann mit einem elastischen Material umgeben, um als Autotürdichtung oder sonst eine Dichtung zu dienen.

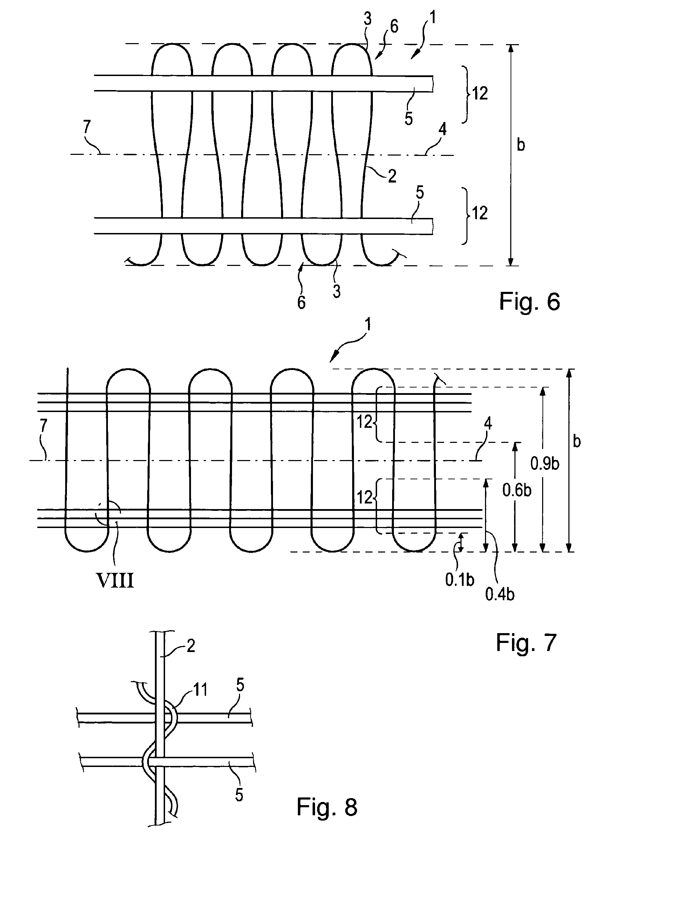

Der in Fig. 6 dargestellte Drahtgrundkörper 1 ist ebenfalls im unverbogenen Zustand dargestellt und weist eine Breite b auf, die durch die maximale Ausdehnung der Endbereiche 6 der Buchten 3 festgelegt ist. Der Draht 2 wird von zwei Zugmitteln 5 umschlossen. Die Zugmittel 5 können als zopfartige Drähte ausgebildet sein. Zur Verbindung des Drahtes 2 mit dem Zugmittel 5 bieten sich Strick-und/oder Häkeltechniken an. Zusätzlich ist es möglich, in den Berührungsbereichen des Drahtes 2 mit den Zugmitteln 5 Kleber einzubringen, insbesondere UVaushärtenden Kleber. Die Verwendung eines solchen Klebers bietet sich auch in anderen Varianten an, insbesondere in den nach den Fig. 7, 8 und 9 dargestellten Varianten.

In Fig. 7 ist diese weitere Variante eines Drahtgrundkörpers 1 dargestellt. Hier sind insgesamt sechs Zugmittel 5 vorhanden, die beanstandet zu der Biegeachse 7, die in den beiden Varianten der Fig. 6 und 7 deckungsgleich mit der Mittellängsachse 4 ist, angeordnet sind. Jeweils zwei Zugmittel 5 sind auf einer Seite der Biegeachse 7 angeordnet.

Der Detailabschnitt VIII ist in Fig. 8 näher dargestellt, wobei aus dieser Figur dann ersichtlich wird, dass eine als Draht ausgebildete Faser 11 für die Lagefestlegung des Drahtes 2 zu dem Zugmittel 5 zuständig ist. Die Faser 11 umgreift abwechselnd den Draht 2 und die Zugmittel 5.

Aus Fig. 6 und 7 ist auch die Anordnung eines Anbringbereiches beiderseits der Biegeachse 7 entnehmbar. Dieser Anbringbereich 12 ist zwischen 10 % und 40 % der Breite bzw. zwischen 60 % und 90 % der Breite b des Drahtgrundkörpers in unverbogenem Zustand angeordnet.

Auch in der Variante gemäß Fig. 6 ist der Anbringbereich 12 in einem vergleichbaren Abschnitt angeordnet, wie bei der Variante gemäß Fig. 7.

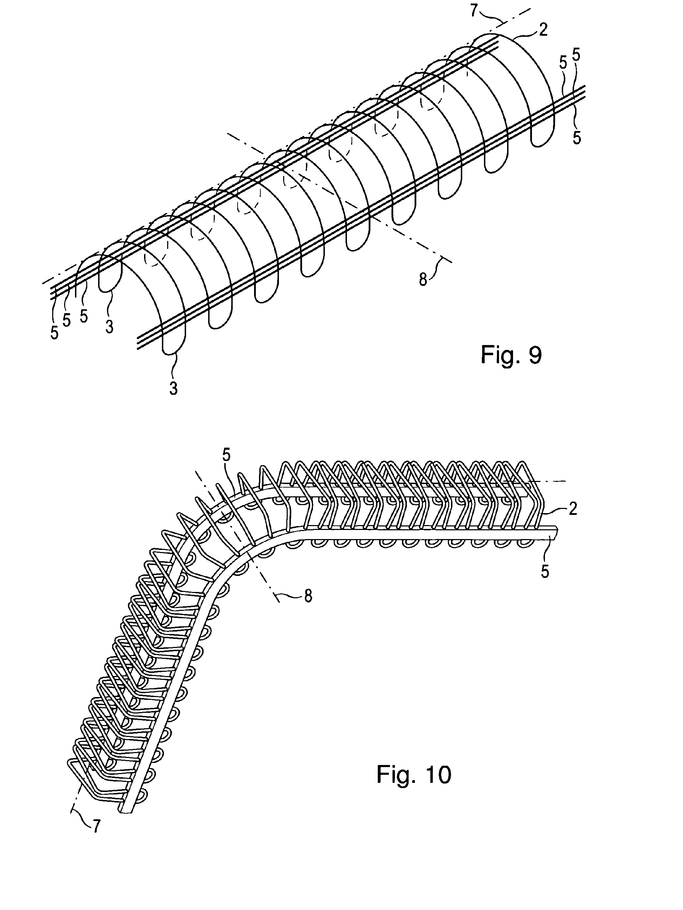

In Fig. 9 ist für beide Varianten exemplarisch eine U-förmige Ausformung des Drahtgrundkörpers 1 am Beispiel der zweiten Variante dargestellt. Allerdings ist nur eine der beiden Biegeachsen 7 dargestellt. Bei tatsächlich nur einer vorhandenen Biegeachse 7 wird eine V-förmige Ausformung erreicht. Aus Gründen der Übersichtlichkeit sind die hinteren Buchten 3 des Drahtes 2 nur gestrichelt dargestellt. Auch sind die hinten liegenden Zugmittel 5 nur abschnittsweise dargestellt.

In Fig. 10 ist der zweifach umgebogene Drahtgrundkörper der vorab erläuterten Variante mit verstärkten Zugmitteln im Außenbereich des Drahtgrundkörpers 1 dargestellt. Es ist gut zu erkennen, dass die beiden Zugmittel 5 in den Bereich einer neutralen Faser des zweifach umgebogenen Drahtgrundkörpers 1 gelegt sind.

Der fertig gestellte Drahtgrundkörper 1 wird an den Zugmitteln 5 zur Fertigstellung verbracht und dort dann von Gummi, Kautschuk oder ähnlichen Materialien umspritzt, um so die fertige Außentürdichtung zu bilden.

Als Materialien für den Draht 2 bietet sich Kohlenstoffstahl an. Ein solcher Draht 2 soll eine Zugfestigkeit von 700 bis 900 n/mm2 aufweisen, vorzugsweise 36 g/m wiegen und einen Durchmesser von 0,75 mm haben.

Drähte mit einem flachen Querschnitt und einer hohen Zugfestigkeit, die 4,5 g/m wiegen, bieten sich zur Verwendung als Zugmittel 5 oder als Fasern 11 an. Es ist jedoch auch möglich, dass sowohl für den Draht 2 als auch die Zugmittel 5 und/oder die Faser 11 dieselbe Drahtsorte verwendet wird.

Wenn in einer besonderen Variante die Zugmittel 5 ebenfalls als Drähte ausgebildet sind, wird der Draht 2 dann als erster Draht und das Zugmittel 5 als zweiter Draht zu bezeichnen sein. In dieser Variante werden zur Ortsfestlegung des ersten und zweiten Drahtes miteinander, als dritte Drähte ausgebildete Fasern 11 verwendet. Es bietet sich an, den Draht zu verzinken oder vorzugsweise unverzinkt zu verwenden, jedoch dann auf eine Ölbenetzung oder einen chemischen Korrosionsschutz zu achten.

Unterschiedliche Querschnitte, auch nur abschnittsweise variierende Querschnitte, haben sich ebenfalls als vorteilhaft herausgestellt, nämlich elliptische, polygonale, runde und rechteckförmige Querschnitte. Der Bereich, in dem sich die Drähte berühren, kann auch komprimiert ausgestaltet sein.

Bei der Herstellung bietet sich ferner an, auf Häkel- oder Strickmaschinen zurückzugreifen.

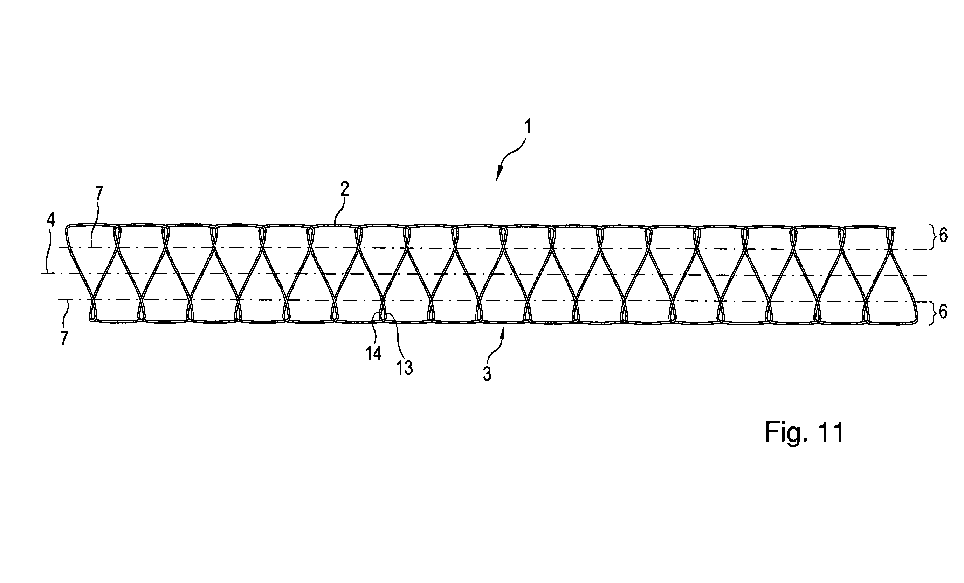

In Fig. 11 ist eine erfindungsgemäße Ausführungsform dargestellt. Dabei ist der Draht 2 in dreiecksförmigen Buchten 3 angeordnet. Die Buchten sind aneinander anschließend, entlang einer in Fig. 11 dargestellten Mittellängsachse 4, aneinandergereiht. Die Buchten 3 sind dabei so angeordnet, dass sich der Draht 2 mehrmals überkreuzt.

Die Ecken der Buchten 3, also die drei Ecken der annäherungsweise dreiecksförmigen Buchten 3, ragen in das Innere der jeweils anderen angrenzenden Bucht 3. An den Ecken jeder dreiecksförmigen Bucht 3 ist ein erster Kontaktbereich 13 vorhanden, der in direktem Kontakt mit einem zweiten Kontaktbereich 14 einer angrenzenden Bucht 3 steht.

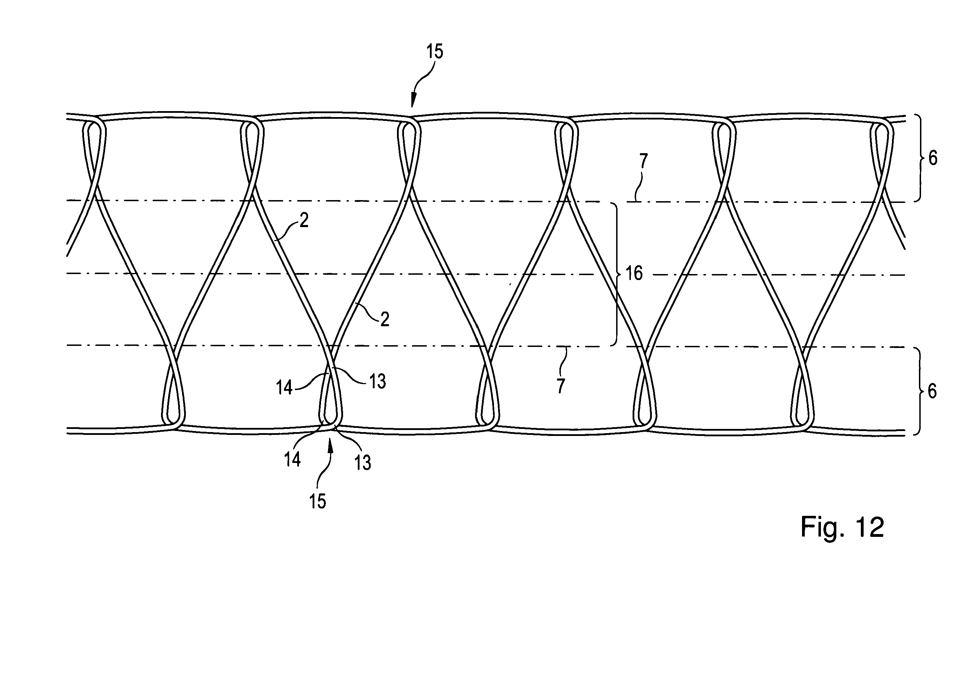

In Fig. 12 sind die miteinander in Kontakt liegenden Kontaktbereiche näher dargestellt. Dabei überkreuzt oder überdeckt der Draht 2, welcher eine erste Bucht 3 bildet, sich selbst im Bereich einer zweiten Bucht 3. Dabei liegt der erste Kontaktbereich 13 über einem zweiten Kontaktbereich 14 an zwei unterschiedlichen Stellen.

In dem in den Fig. 11 und 12 dargestellten Ausführungsbeispiel sind der erste Kontaktbereich 13 und der zweite Kontaktbereich 14 miteinander verschweißt. Es ist jedoch auch möglich, Lot zwischen den Draht 2 einzubringen, so dass der erste Kontaktbereich 13 mit dem zweiten Kontaktbereich 14 verlötet ist.

Die beiden Kontaktbereiche 13 und 14 sind exemplarisch an einer Stelle des durch den Draht 2 gebildeten Drahtgrundkörpers 1 dargestellt. Hiernach sind diese beiden Kontaktbereiche an allen angedeuteten Ecken der Bucht 3, sowie alle nachfolgenden Buchten 3, vorhanden.

In den Fig. 11 und 12 sind zwei Biegeachsen 7 äquidistant zur Mittellängsachse 4 und parallel zu dieser dargestellt. Wird der Drahtgrundkörper 1 nun um jede der beiden Biegeachsen 7 je um 90° gebogen, so wird eine nahezu U-förmige Umbiegung erreicht.

Damit der sogenannte "hungry horse"-Effekt nicht auftritt, bietet es sich an, den Draht 2 außerhalb der beiden Biegeachsen 7 abzuplätten. Dies kann mittels üblicher Pressen kontinuierlich oder sequentiell erfolgen. Als Resultat ist der Draht 2 im Endbereich 6 dann abgeflacht und weist einen rechteckigen Querschnitt auf. Abweichend davon weist der Draht 2 im einem Mittelbereich 16 einen runden Querschnitt auf.

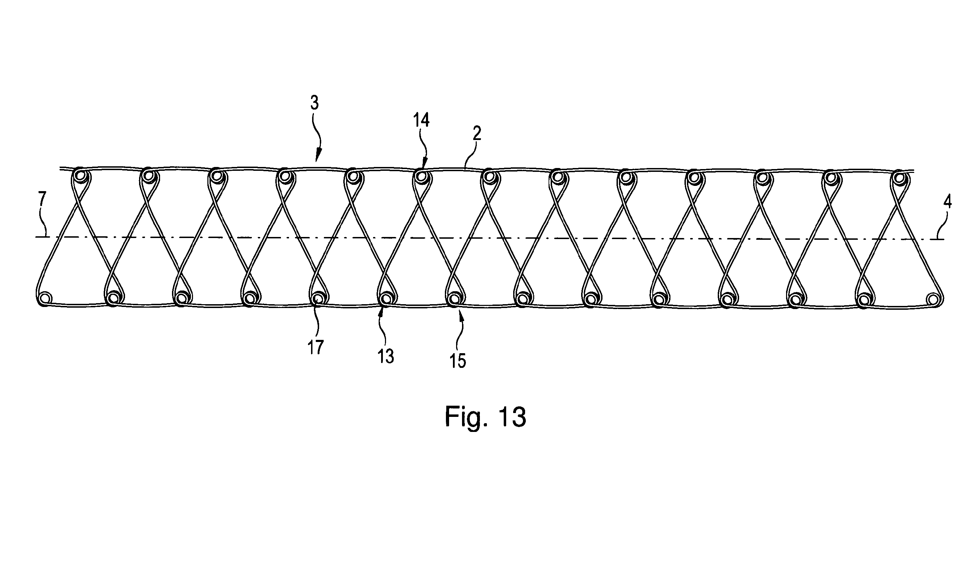

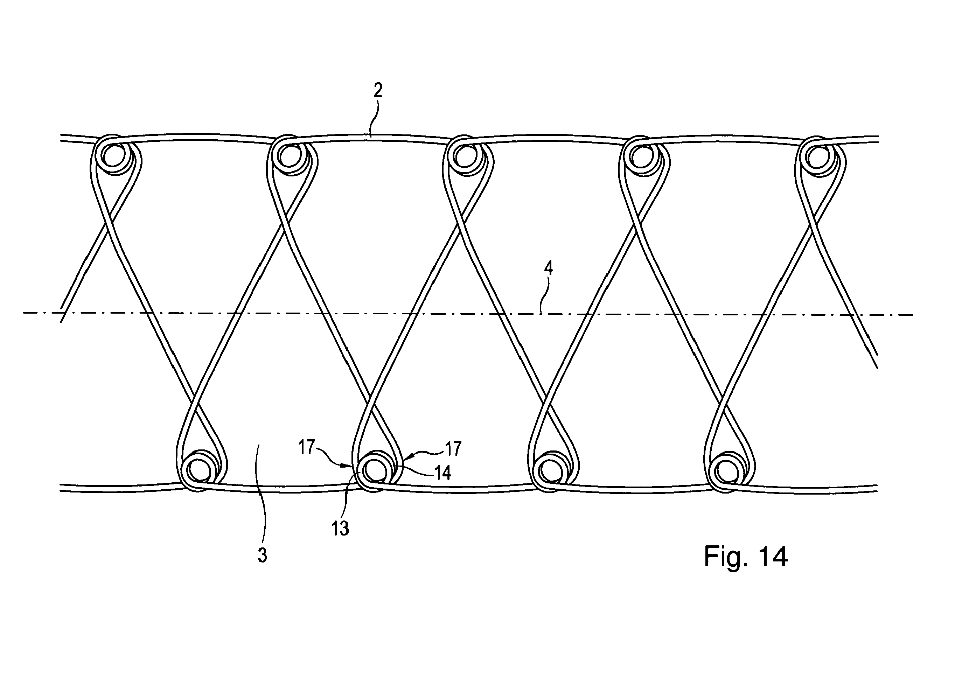

Um auf einer Länge von etwa 3 m auch eine zusätzlichen Dehnung von ca. 50 mm zu ermöglichen, was bei der Fertigung von Vorteil ist, ist bei der in den Fig. 13 und 14 dargestellten Ausführungsform im Bereich der Ecken 15 der Draht 2 so umgeformt, dass er Schlaufen 17 bildet.

Wie besonders gut in Fig. 14 zu erkennen, liegen dabei immer zwei Schlaufen übereinander. Dabei bildet die eine Schlaufe 17 den ersten Kontaktbereich 13 und die darüber oder darunter liegende Schlaufe 17 den zweiten Kontaktbereich 14.

Während in dem in Fig. 14 dargestellten Ausführungsbeispiel die Schlaufen 17 einer in Mittellängsachsenrichtung gesehen nachfolgenden Bucht 3 oberhalb einer vorhergehenden Schlaufe 17 liegt, kann dies auch genau anders herum angeordnet sein oder alternierend.

Auch ist es möglich, dass die Schlaufen 17 auf der einen Seite der Mittellängsachse immer über und auf der anderen Seite untereinander angeordnet sind. Auch ist ein Alternieren relativ zur Mittellängsachse möglich, sowie jegliche Kombination.

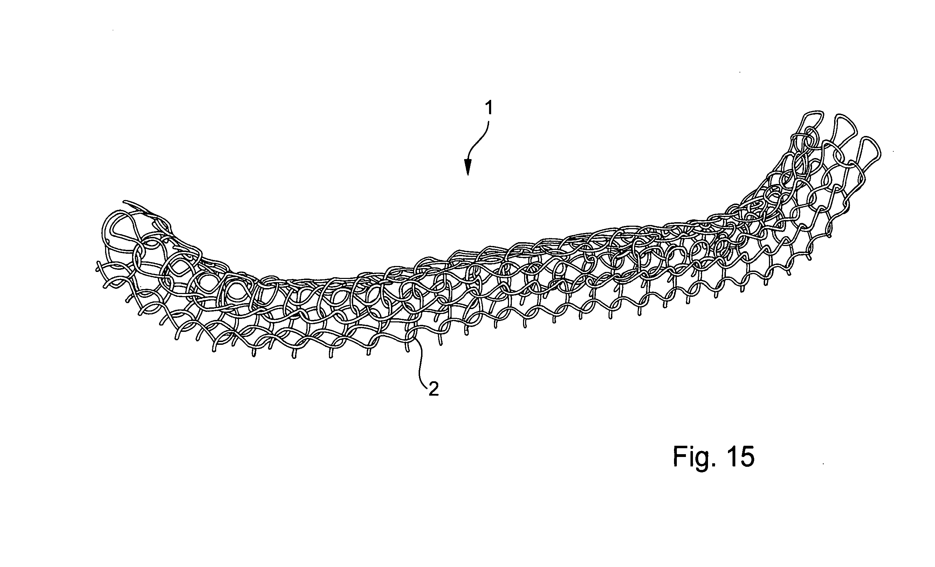

Eine erfindungsgemäße Weiterbildung ist in Fig. 15 dargestellt, wobei die Schlaufen 17 zu Maschen umgeformt sind, so dass der Draht 2 sie mehrfach umschlingt.

Aufgrund einer Abkappung des Drahtgrundkörpers sind zahlreiche lose Enden des Drahtes 2 erkennbar, was vorteilhafterweise in einer Variante jedoch vermieden wird.

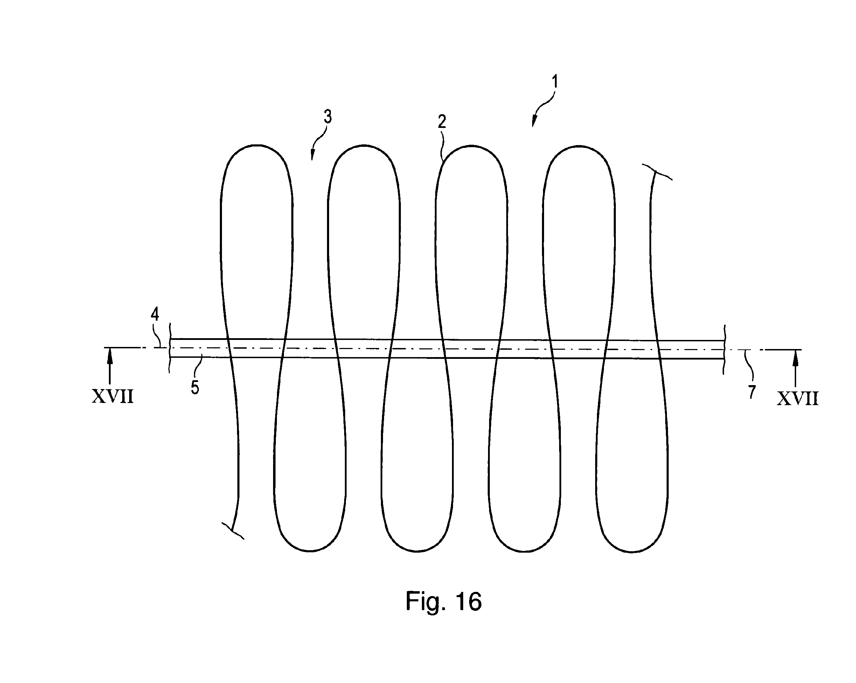

In Fig. 16 ist ein erfindungsgemäßer Drahtgrundkörper 1 dargestellt. Dabei ist ein Draht 2 in mäanderförmigen Buchten 3 entlang der Mittellängsachse 4 des Drahtgrundkörpers 1 ausgerichtet. In Richtung der Mittellängsachse 4, und koaxial mit dieser, ist ein Zugmittel 5 angeordnet. Während der Draht 2 einen runden Querschnitt aufweist, weist das Zugmittel 5, das ebenfalls ein Draht ist, einen rechteckigen Querschnitt auf. Das Zugmittel 5 kann insbesondere als schmales Blech ausgestaltet sein, das sich um die eine Biegeachse 7 erstreckt und parallel zu dieser ist oder zwischen der alternativ zweifach vorhandenen Biegeachse 7 erstreckt und parallel zu dieser ist.

Das Zugmittel 5 ist mit dem Draht 2 fest verbunden. In dem in Fig. 16 dargestellten Ausführungsbeispiel sind der Draht 2 und das Zugmittel 5 miteinander verschweißt. Es bieten sich aber auch Verlötungen an. Auch ist es möglich, mit einer länglichen Faser, wie etwa einem Garn oder einem weiteren Draht, den Draht 2 am Zugmittel 5 anzubinden.

In Fig. 16 sind vorhandene Verwerfungen aus Gründen der Übersichtlichkeit nicht dargestellt, die sich alternierend nach oben und unten entlang des Zugmittels 5 erstrecken.

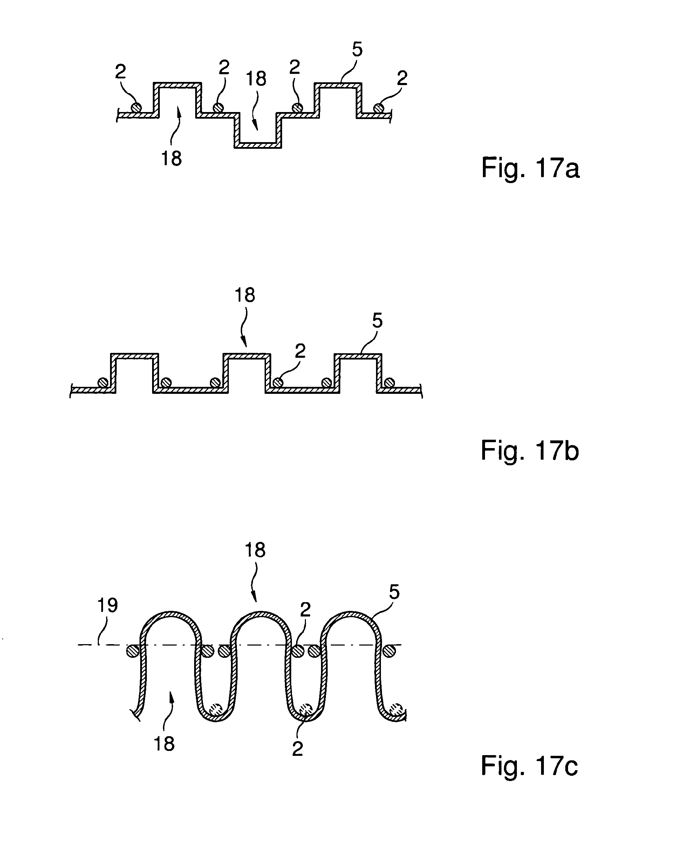

In den Fig. 17a bis 17c sind unterschiedliche Zusammenfügungen des Drahtes 2 mit dem Zugmittel 5 entlang der Linie XVII aus Fig. 16 dargestellt. Während in den Fig. 17a und 17b eine eckige Darstellung der mit den Bezugszeichen 18 versehenen Verwerfungen gewählt ist, ist in Fig. 17c eine sinusförmige, also gerundete Ausgestaltung der Verwerfungen, dargestellt. Während in Fig. 17 der Draht 2 mittig, gesehen zu einer gedachten Mittelebene 19, angeordnet ist, ist es auch möglich, dass der Draht 2 immer an einer gestrichelt dargestellten Position angebracht ist.

Die einzelnen Aspekte der einzelnen Varianten sind in Verwirklichung des Erfindungsgedankens auch miteinander kombinierbar.

### Bezugszeichenliste:

- 1: Drahtgrundkörper
- 2: Draht
- 3: Bucht
- 4: Mittellängsachse
- 5: Zugmittel
- 6: Endbereich
- 7: Biegeachse
- 8: Umformachse
- 9: Lasche
- 10: Verbindungssteg
- 11: Faser
- 12: Anbringbereich
- 13: 1. Kontaktbereicht
- 14: 2. Kontaktbereich
- 15: Ecke
- 16: Mittelbereich
- 17: Schlaufe
- 18: Verwerfung
- 19: Mittelebene

## Patentansprüche

1. Drahtgrundkörper zum Verstärken einer Dichtung aus elastischem Material, wie einer Türdichtung, wobei der Drahtgrundkörper (1) einen in Buchten (3) entlang einer Mittellängsachse (4) des Drahtgrundkörpers (1) angeordneten Draht (2) aufweist, der von einem Zugmittel (5) gekreuzt ist, **dadurch gekennzeichnet, dass** nur ein einziges Zugmittel (5) quer zu den Buchten (3), zumindest annähernd parallel zur Mittellängsachse (4) ausgerichtet, vorhanden ist.

2. Drahtgrundkörper nach Anspruch 1, **dadurch gekennzeichnet, dass** das Zugmittel (5) äquidistant zu den Enden der Buchten (3) angeordnet ist.

3. Drahtgrundkörper nach Anspruch 1 oder 2, **dadurch gekennzeichnet, dass** das Zugmittel (5) als Draht, insbesondere als Flachdraht ausgebildet ist.

4. Drahtgrundkörper nach einem der Ansprüche 1 bis 3, **dadurch gekennzeichnet, dass** das Zugmittel (5) um eine Ebene (19) durch den Draht, in der auch die Mittellängsachse (4) befindlich ist, oszillierende Verwerfungen (18) aufweist.

5. Drahtgrundkörper nach Anspruch 4, **dadurch gekennzeichnet, dass** die Verwerfungen (18) sich beidseitig oder einseitig der Ebene (19) erheben und vorzugsweise eine sinusförmige Ausprägung aufweisen.

6. Drahtgrundkörper nach einem der Ansprüche 1 bis 5, **dadurch gekennzeichnet, dass** der Drahtgrundkörper (1) um eine Biegeachse (7), die parallel zur Mittellängsachse (4) ausgerichtet ist, V-förmig gebogen ist oder um zwei Biegeachsen (7), die parallel oder quer zur Mittellängsachse (4) ausgerichtet sind, im Wesentlichen U-förmig gebogen sind.

7. Drahtgrundkörper nach Anspruch 6, **dadurch gekennzeichnet, dass** der Draht (2) in einem von einer Biegeachse (7) aus gesehen äußeren Bereich (6) flachgedrückt ist.

8. Drahtgrundkörper nach Anspruch 6, **dadurch gekennzeichnet, dass** das Zugmittel (5) zwischen den Biegeachsen (7) angeordnet ist.

9. Drahtgrundkörper nach einem der Ansprüche 1 bis 8, **dadurch gekennzeichnet, dass** die Buchten (3) mäanderförmig entlang der Mittellängsachse (4) aneinander gereiht sind.

10. Drahtgrundkörper nach einem der Ansprüche 1 bis 9, **dadurch gekennzeichnet, dass** der Draht (2) einen runden Querschnitt und das Zugmittel (5) einen eckigen Querschnitt aufweist.

11. Drahtgrundkörper nach einem der Ansprüche 1 bis 10, **dadurch gekennzeichnet, dass** der Draht (2) mit dem Zugmittel (5) stoff-, form- und/oder kraftschlüssig verbunden ist.

12. Drahtgrundkörper nach einem der Ansprüche 1 bis 11, **dadurch gekennzeichnet, dass** das Zugmittel (5) entweder über dem Draht (2) oder unter dem Draht (2) hindurchgeführt ist oder abwechselnd über und unter dem Draht (2) hindurchgeführt ist.

13. Drahtgrundkörper nach einem der Ansprüche 1 bis 12, **dadurch gekennzeichnet, dass** das Zugmittel (5) an dem Draht (2) über ein längliches Element, wie einen weiteren Draht angebunden ist.

14. Drahtgrundkörper nach einem der Ansprüche 6 bis 13, **dadurch gekennzeichnet, dass** der Drahtgrundkörper (1) um eine zur Biegeachse (7) orthogonal ausgerichtete Umformachse (8) gebogen ist.

15. Dichtung mit einem Drahtgrundkörper (1) nach einem der Ansprüche 1 bis 14.
